# EUROPEAN PATENT SPECIFICATION

(11) **EP 2 319 328 B1**
(45) Date of publication and mention of the grant of the patent: **03.09.2014**
(21) Application number: 09175246.9
(22) Date of filing: 06.11.2009
(51) Int. Cl.: A23G 1/00, A23G 1/18

(54) **Process for tempering chocolate**
Verfahren zum Temperieren von Schokolade
Procédé pour le recuit du chocolat

(43) Date of publication of application: 11.05.2011
(73) Proprietor: Kraft Foods R & D, Inc., Deerfield, IL 60015 (US)
(72) Inventor: Rose, Mehran, 85662, Hohenbrunn (DE); Paggios, Konstantinos, 81541, Munich (DE); Thiele, Martin, 83607, Holzkirchen (DE); Riedel, Uwe, 79594 Inzlingen (DE)
(74) Representative: HOFFMANN EITLE

(56) References cited:
- GB-A- 700 205
- US-A- 2 289 934
- US-A- 2 638 329

## Description

### Technical Field

The present invention relates to an improved process for tempering cocoa butter containing mass, including cocoa butter, chocolate, cocoa butter equivalent, cocoa butter substitute and replacers, mixtures of cocoa butter with anhydrous milk fat and/or cocoa butter improver, or mixture of cocoa butter with another fat, preferably a filling fat. In particular, it relates to a one-step process for tempering.

### Background of the Invention

The flavour and mouthfeel of chocolate and chocolate-like masses results from the combination of the components as well as the process of manufacture. Chocolate contains solid particles dispersed throughout a fat matrix derived mainly from cocoa butter and milk fat.

Cocoa butter which typically is the predominant fat in chocolate is a polymorphic material. I.e. it crystallizes in several different crystal packing configurations (Wille and Lutton "Polymorphism of Cocoa Butter", J. Amer. Oil. Chem. Society, Vol. 43 (1966), pages 491-496). Generally, six different polymorphs are recognized which are set out in Table 1 below.

**Table 1**

| Polymorph | Structure Type | Approximate Melting Point [°C] | Reported Melting Point [°C] |
|---|---|---|---|
| I | partly β' | 0-5 | 0-18 |
| II | α | 16-18 | 17-24 |
| III | β' | 23-36 | 20-26 |
| IV | β' | 26-28 | 25-28 |
| V | β | 30-33 | 30-35 |
| VI | β | 33-36 | 32-36 |

Forms I and II are produced, for example, by rapidly cooling melted untempered chocolate to low temperatures and are very unstable due to their low melting points. Forms III and IV melt at higher temperatures than Forms I and II but are not the most desirous forms for confectionery manufacture. Forms V and VI are the most stable forms of cocoa butter. It is desirable to have Form V as the predominant form in a well-tempered chocolate. Form V transforms slowly into Form VI after a period of time. Form VI is believed to be the transformation result of Form V, and cannot be produced in the conventional batch or continuous tempering processes. This crystal form is the most stable polymorphic form and cannot isothermally be transformed into other lower melting crystal forms. Products made with Form VI have the following characteristics:
- better heat stability,
- lower tendency for fat bloom, and
- better firmness/snap, gloss.

Accordingly, chocolate processing is strongly linked to the crystallization and polymorphic behaviour of the fat phase. Before chocolate can be satisfactorily processed from liquid to solid using conventional methods, it must be tempered after which it is gently cooled to form a set chocolate having a stable fat phase.

The conventional process for tempering chocolate has been developed by Walter Kreuter (US 4,238,516) and comprises the following steps:
- heating the chocolate mass to a first temperature of e.g. 45-60°C thereby melting the cocoa butter fats in the mass;
- cooling the mass at a mild cooling rate to a second temperature of e.g. 28-29°C, thereby initiating pre-crystallization of the mass;
- mildly heating the mass to a third temperature of e.g. 33-34°C at which pre-crystallization is complete.

Chocolate tempering is commonly executed in automatic tempering machines which are available e.g. from SOLLICH^{®} and AASTED^{®}. During tempering, the liquid chocolate stream is constantly agitated while being super cooled to the fat crystallization temperature of usually 27-31°C. Generally, these tempering machines have various zones with heating and cooling possibility and are disclosed e.g. in EP 0 237 168, EP 0 654 222, DE 39 13 941, EP 0 289 849, EP 0 394 721 and EP 0 339 129.

In particular, EP 0 237 168 discloses a method of tempering edible fat compositions such as chocolate which involve controlling the temperature of the composition to a predetermined temperature, passing the temperature-controlled composition continuously through a heat exchanger, monitoring the consistency of the composition being discharged from the heat exchanger and using this to control the cooling of the composition in the heat exchanger. Monitoring of the consistency may e.g. be effected by monitoring the pressure difference across the heat exchanger using pressure transducers.

However, the prior art method are unsatisfactory because they require complicated machineries.

Moreover, it was not possible to produce Form VI from the molten cocoa butter containing mass under the static conditions of the prior art processes. In the prior art, transition to Form VI could only be achieved through the memory effect of cocoa butter or seeding process such as described in e.g. WO 01/06863 and WO 00/72695.

EP 0 525 524 discloses a method for making Form VI crystals by a thermal treatment which entails cooling and heating. The cooling process is far stronger than in the previous methods, and would cause a solidification of the cocoa containing mass under static conditions. This solidification is prevented by conducting the method in a small continuous flow container with a volume of 0.25 - 10 litres under high shear. The method uses single shaft mixing, and the rotational speed is controlled through rpm variation. This shearing operation has a greater effect in the longitudinal direction than in the radial one.

Document GB 700 205 discloses a machine for tempering chocolate, equipped with a scraper and an impeller.

However, it was previously not possible to design the tempering apparatus in a way so as to ensure a residence time, mixing performance which allows for providing Form VI crystals in one step and which can be conducted in larger vessels.

### Summary of the Invention

Surprisingly, the present inventors now discovered that by conducting the tempering process in a specific tank, the tempering process can be simplified and Form VI crystals can be obtained. In addition, the process of the invention results in a higher quantity of crystals than the prior art process, i.e. approx. more than 1% and up to 20 % as compared to 0.5-1 %. This results in a chocolate which is more stable and is less prone to fat bloom.

In particular, the present invention is directed to a tank (1) for tempering chocolate containing mass, which is equipped with a scrapper (2) and an impeller (5), **characterized in that** the impeller (5) induces a downward current of the cocoa butter containing mass in the tank.

Further, the present invention relates to a process for tempering cocoa butter containing mass **characterized in that** the temperature is decreased from an initial temperature of 53°C to 57°C to a final temperature of 30°C to 34°C in a single step.

### Description of the Drawings

- Fig. 1: shows one embodiment of the tank according to the invention.
- Fig. 2: shows a cross section of the tank, including the scraper and the impeller.
- Fig. 3: shows a particularly preferred shape for the impeller used in the present invention.
- Fig. 4: shows a comparison of the temperature profile according the invention and the one of the prior art.
- Fig. 5: shows an XRPD analysis of a chocolate sample obtained with the process of the invention.

### Preferred Embodiment of the Invention

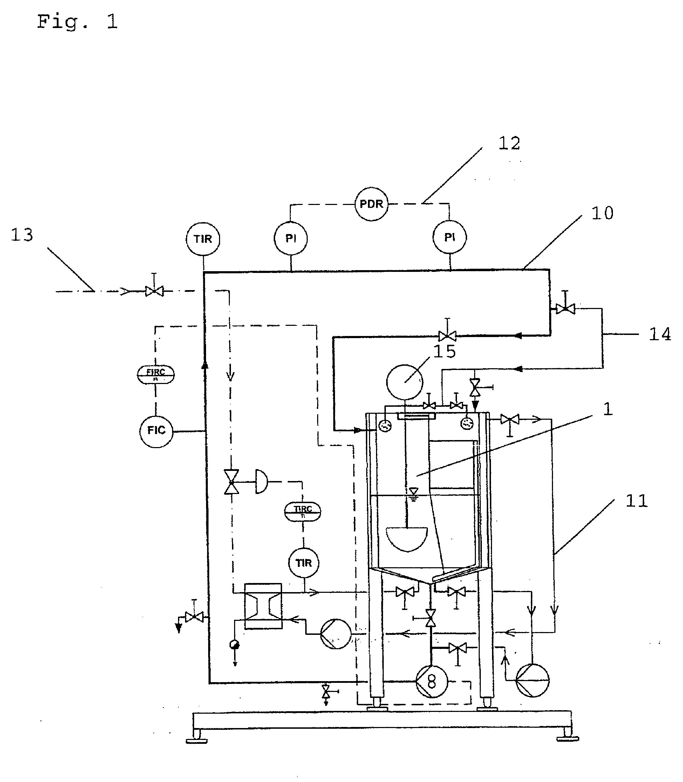

The present invention relates to a tank for tempering cocoa butter containing mass, in particular chocolate, which includes a scraper and an impeller. One exemplary embodiment of a tank according to the invention is depicted in Fig. 1.

The tank 1 is equipped with a multi shaft mixer including a scraper 2 and an impeller 5. The scrapper has one arm or more, and preferably 3 arms. The impeller 5 generally has one or more blades, preferably 4 blades.

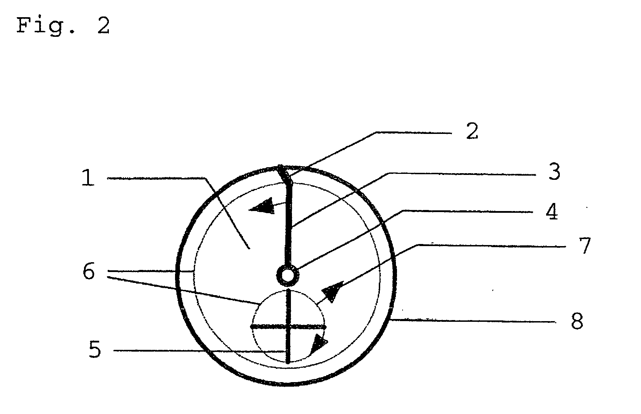

A cross-sectional view of the tank 1 which shows the arrangement of the scraper 2 and the impeller 5 is depicted in Fig. 2. The scraper 2 and the impeller 5 rotate in the direction of the arrows 7. The spheres of influence 6 of the scraper 2 and the impeller 5 are also indicated in Fig. 2.

The impeller 5 is designed so as to induce a downward current in the cocoa butter containing mass. The specific design of the impeller provides high rotational speed through 3-dimensional agitation. This, in turn, allows for a uniform control of the temperature in the tank and for one-step tempering. Further, it is assumed that the specific tempering process of the present invention results in Form VI crystals of cocoa butter.

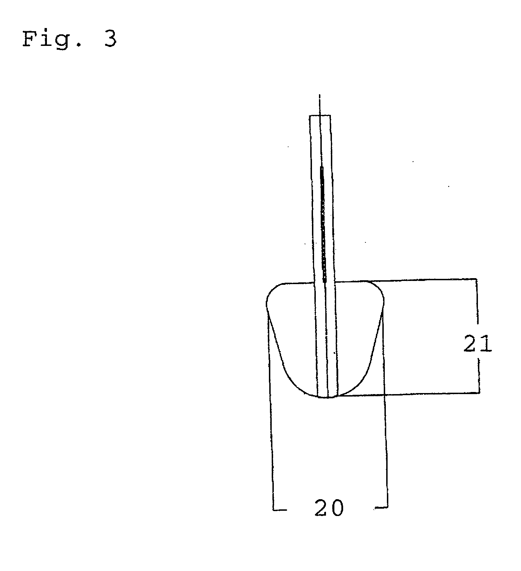

The downward current in the cocoa butter containing mass is induced by a section of the blade(s) wherein the width decreases in the downward direction of the tank. A particularly preferred shape of the impeller is shown in Fig. 3.

The tank 1 is equipped with a pipe for product circulation 10. A device for measuring the pressure 12 may be installed in this pipe for product circulation 10. This configuration allows for measuring the pressure drop and thus the viscosity of the mass, thereby enabling the assessment of the crystallization state of the cocoa butter containing mass.

As shown in Fig. 1, the tank 1 is further fitted with different pipes for hot water circulation 11, steam 13 and CIP (cleaning-in-place) 14. Further it is equipped with a control and a temperature indicator.

The tank according to the present invention differs from tanks used in the prior art Kreuter process in that it has been specifically designed for keeping the temperature constant while providing high shearing functionality.

The tank of the present invention allow for adjusting the speed of the scraper 2 and the impeller 5 based on the required shear stress. In particular, the impeller speed may be 22-114 rpm, and the scraper speed may be 11-57 rpm with a proportional factor impeller to scraper of 2.

In a further embodiment, the present invention provides a process for tempering cocoa butter containing mass **characterized in that** the temperature is decreased from an initial temperature of 53°C to 57°C to a final temperature of 30°C to 34°C, preferably a final temperature of 30°C to 32°C, in a single step. In a preferred embodiment, the process of the present invention does not involve subsequent heating of the cocoa butter containing mass.

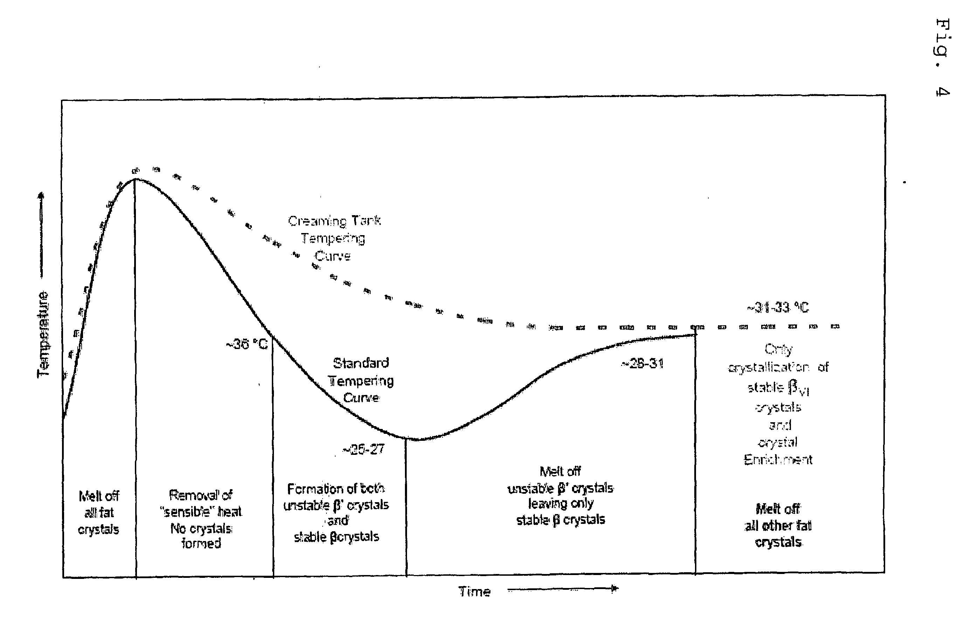

A preferred example of the temperature profile used in the process according to the present invention is depicted in Fig. 4 in comparison to the temperature profile of the prior art Kreuter process. It is derivable from Fig. 4 that the process of the present invention does not involve super cooling of the mass to a temperature lower than 30°C and the subsequent reheating of the mass.

Accordingly, the process of the invention allows for a shorter tempering procedure in comparison with the prior art. In contrast to the Kreuter process where the duration of the tempering process is dependent on the capacity of the apparatus and is typically within the range of 3 to 8 hours for an apparatus having a capacity of up to 8000 kg, the time necessary for the tempering process of the present invention is independent of the batch size but depends on the temperature and the shear conditions.

The tank of the present invention preferably allows for continuous charging and discharging of the cocoa butter containing mass. In a particularly preferred embodiment, the process of the present invention is thus conducted in a continuous manner.

The cocoa containing mass which tempered in accordance with the present invention may be selected from cocoa butter, chocolate, cocoa butter equivalent, cocoa butter substitute and replacers. In addition, it may be a mixture of cocoa butter with anhydrous milk fat and/or cocoa butter improver, or a mixture of cocoa butter with another fat, preferably a filling fat.

In this respect, the term "cocoa butter" refers to the fat of the beans of the fruit of *Theobroma* cacao, 100% fat.

The term "cocoa butter equivalent" (CBE) refers to a vegetable fat composed of symmetrical 2-oleo-disaturated triacylglycerols of C16 and C18 fatty acids. They should be compatible with cocoa butter in the proportions normally used in chocolate.

The term "cocoa butter improver" (CBI) means a harder version of CBE due to the content of triacylglycerol containing stearic-oleic-stearic acids. It is used in chocolate formulations having a high content of milk fat or those meant for tropical climates.

The term "cocoa butter replacer" (CBR) refers to a nontempering fat differing in composition from cocoa butter and the tempering CBE and CBI. It is produced by fractionation and hydrogenation of oils rich in C16 and C18 fatty acids.

The term "cocoa butter substitute" (CBS) means a fat based on palm kernel and coconut oil, fractionated and hydrogenated. Because of its poor miscibility with cocoa butter, CBS is preferably used with low-fat cocoa powder (10-12% fat) only.

These definitions are in line with the LEXICON OF LIPID NUTRITION, Pure Appl. Chem. 2000, Vol. 73, No. 4, pp. 685-744.

### Example

Chocolate mass having the following composition was used:

| | |
|---|---|
| Sugar | 28 % |
| Cocoa liquor | 42 % |
| Cocoa butter | 22 % |
| Cocoa powder | 8 % |

During this experiment, the tank was operated with an impeller speed of 114 rpm and a scraper speed of 57 rpm.

The chocolate mass was molten at a temperature of 50-55 °C in warming cabinet three_days before trials. Liquid hot cocoa butter 50-55 °C or hot chocolate was used to rinse the tank and warm-up the whole processing line.

Hot water was circulated in the insulated double-jacketed tank, thereby bringing the system to the desired operating temperature of 55±2 °C. The tank was filled with 55+2 °C hot chocolate mass through accessible lid on top of tank. This hot chocolate mass was immediately agitated using the scraper and the impeller. During the processing time, the chocolate mass was circulated in the circulation pipe to measure the pressure drop.

The chocolate mass was cooled to 31±1°C with a constant rate of 0.43°C/min during approx. 1 hour.

Using the sampling valve, approx. 1000 g hot chocolate was extracted into a specialist plastic bag for confectionary applications and then subsequently transferred into in moulds, having a temperature of 30°C. After filling, the moulds were vibrated and placed in a cooling chamber having a temperature of 4°C for approx. 30 minutes. The resulting tablets were removed from the moulds and wrapped with foil. These samples were used for analysis.

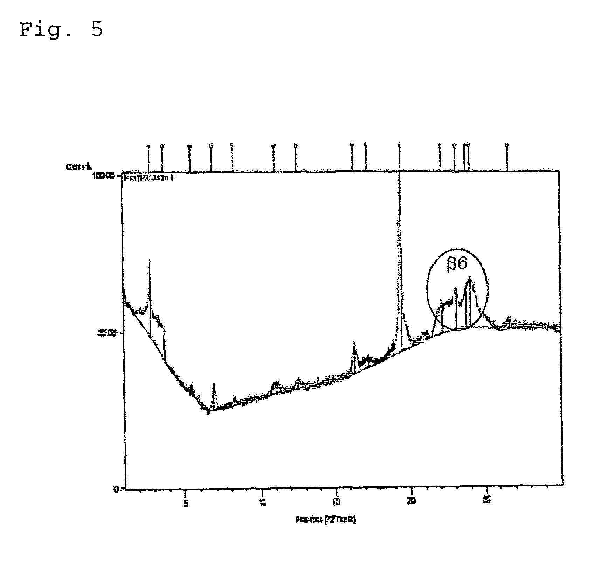

An XRPD analysis of the chocolate mass obtained is shown in Fig. 5. It is clearly derivable form the peaks at 2θ=22-25° that Form VI crystals were obtained in the mass.

### Reference numerals

- 1: Tank
- 2: Scraper
- 3: Scraper shaft
- 4: Motor shaft
- 5: Impeller
- 6: Spheres of influence
- 7: Direction of rotation
- 8: Insulated jacket of the tank
- 10: Pipe for product circulation
- 11: Pipe for hot water circulation
- 12: Device for pressure measurement
- 13: Pipe for steam circulation
- 14: CIP
- 15: Motor
- 20: Width of the impeller
- 21: Length of the impeller

## Claims

1. A tank (1) for tempering chocolate containing mass, which is equipped with a scrapper (2), an impeller (5), and a pipe for product circulation (10), **characterized in that** the impeller (5) comprises a section wherein the width of the blade(s) decreases in the downward direction of the tank which induces a downward current of the cocoa butter containing mass in the tank.

2. The tank (1) according to claim 1, wherein a device for measuring the pressure (12) is installed in the pipe for product circulation (10).

3. Use of a tank according to claim 1 or 2 for tempering cocoa butter containing mass.

4. The use according to claim 3, wherein the temperature is decreased from an initial temperature of 53°C to 57°C to a final temperature of 30°C to 34°C in a single step.

5. The use according to claim 3 or 4, which results in the formation of Form VI crystals.

6. The use according to any one of claims 3 to 5, wherein the cocoa butter containing mass is selected from cocoa butter, chocolate, cocoa butter equivalent, cocoa butter substitute and replacers.

7. The use according to any one of claims 3 to 5, wherein the cocoa butter containing mass is a mixture of cocoa butter with anhydrous milk fat and/or cocoa butter improver, or a mixture of cocoa butter with another fat, preferably a filling fat.

8. A process for tempering cocoa butter containing mass **characterized in that** the temperature is decreased from an initial temperature of 53°C to 57°C to a final temperature of 30°C to 34°C in a single step, and that it is conducted in a tank according claim 1 or 2.

9. The process according to claim 8, which does not involve subsequent heating.

10. The process according to claim 8 or 9, which is conducted in a continuous manner.

11. The process according to any one of claims 8 to 10, which results in the formation of Form VI crystals.

12. The process according to any one of claims 8 to 11, wherein the cocoa butter containing mass is selected from cocoa butter, chocolate, cocoa butter equivalent, cocoa butter substitute and replacers.

13. The process according to any one of claims 8 to 11, wherein the cocoa butter containing mass is a mixture of cocoa butter with anhydrous milk fat and/or cocoa butter improver, or a mixture of cocoa butter with another fat, preferably a filling fat.

## Patentansprüche

1. Behälter (1) zur Temperierung einer schokoladenhaltigen Masse, der mit einem Schaber (2), einem Impeller (5) und einer Leitung für den Produktumlauf (10) ausgestattet ist, **dadurch gekennzeichnet, dass** der Impeller (5) einen Abschnitt umfasst, in welchem die Breite der Schaufel(n) nach unten hin im Behälter abnimmt, was einen Abwärtsstrom der Kakaobutter-haltigen Masse in dem Behälter hervorruft.

2. Behälter (1) gemäß Anspruch 1, wobei eine Vorrichtung zur Messung des Drucks (12) in der Leitung für den Produktumlauf (10) installiert ist.

3. Verwendung eines Behälters gemäß Anspruch 1 oder 2 zur Temperierung einer Kakaobutter-haltigen Masse.

4. Verwendung gemäß Anspruch 3, wobei die Temperatur von einer Anfangstemperatur von 53°C bis 57°C auf eine Endtemperatur von 30°C bis 34°C in einem einzelnen Schritt verringert wird.

5. Verwendung gemäß Anspruch 3 oder 4, die zu der Bildung von Kristallen der Form VI führt.

6. Verwendung gemäß einem der Ansprüche 3 bis 5, wobei die Kakaobutter-haltige Masse aus Kakaobutter, Schokolade, Kakaobutter-Äquivalenten, Kakaobutter-Austauschmitteln und -Ersatzstoffen ausgewählt wird.

7. Verwendung gemäß einem der Ansprüche 3 bis 5, wobei die Kakaobutter-haltige Masse eine Mischung aus Kakaobutter mit wasserfreiem Milchfett und/oder einem Kakaobutter-Verbesserungsmittel oder eine Mischung aus Kakaobutter mit einem anderen Fett, vorzugsweise einem Füllfett, ist.

8. Verfahren zur Temperierung einer Kakaobutter-haltigen Masse, **dadurch gekennzeichnet, dass** die Temperatur von einer Anfangstemperatur von 53°C bis 57°C auf eine Endtemperatur von 30°C bis 34°C in einem einzelnen Schritt verringert wird, und dass es in einem Behälter gemäß Anspruch 1 oder 2 durchgeführt wird.

9. Verfahren gemäß Anspruch 8, das keine anschließende Erwärmung beinhaltet.

10. Verfahren gemäß Anspruch 8 oder 9, das in einer kontinuierlichen Weise durchgeführt wird.

11. Verfahren gemäß einem der Ansprüche 8 bis 10, das zu der Bildung von Kristallen der Form VI führt.

12. Verfahren gemäß einem der Ansprüche 8 bis 11, wobei die Kakaobutter-haltige Masse aus Kakaobutter, Schokolade, Kakaobutter-Äquivalenten, Kakaobutter-Austauschmitteln und -Ersatzstoffen ausgewählt wird.

13. Verfahren gemäß einem der Ansprüche 8 bis 11, wobei die Kakaobutter-haltige Masse eine Mischung aus Kakaobutter mit wasserfreiem Milchfett und/oder einem Kakaobutter-Verbesserungsmittel oder eine Mischung aus Kakaobutter mit einem anderen Fett, vorzugsweise einem Füllfett, ist.

## Revendications

1. Réservoir (1) pour tempérer une masse contenant du chocolat, qui est équipé d'un racloir (2), d'une turbine (5) et d'un tuyau pour la circulation de produit (10), **caractérisé en ce que** la turbine (5) comprend une section dans laquelle la largeur de la (des) pale(s) diminue dans la direction descendante du réservoir qui induit un courant descendant de la masse contenant du beurre de cacao dans le réservoir.

2. Réservoir (1) selon la revendication 1, dans lequel un dispositif pour mesure la pression (12) est installé dans le tuyau pour la circulation de produit (10).

3. Utilisation d'un réservoir selon la revendication 1 ou 2 pour tempérer la masse contenant du beurre de cacao.

4. Utilisation selon la revendication 3, dans laquelle la température est diminuée d'une température initiale de 53°C à 57°C jusqu'à une température finale de 30°C à 34°C lors d'une étape unique.

5. Utilisation selon la revendication 3 ou 4, qui se traduit par la formation de cristaux en forme de VI.

6. Utilisation selon l'une quelconque des revendications 3 à 5, dans laquelle la masse contenant le beurre de cacao est choisie parmi le beurre de cacao, le chocolat, l'équivalent du beurre de cacao, le substitut de beurre de cacao et les succédanés.

7. Utilisation selon l'une quelconque des revendications 3 à 5, dans laquelle la masse contenant du beurre de cacao est un mélange de beurre de cacao avec la matière grasse anhydre du lait et/ou un améliorant du beurre de cacao, ou un mélange de beurre de cacao avec une autre matière grasse, de préférence une matière grasse de remplissage.

8. Procédé pour tempérer une masse contenant du beurre de cacao, **caractérisé en ce que** la température diminue d'une température initiale de 53°C à 57°C jusqu'à une température finale de 30°C à 34°C lors d'une étape unique, et qui est réalisé dans un réservoir selon la revendication 1 ou 2.

9. Procédé selon la revendication 8, qui n'implique pas de chauffage successif.

10. Procédé selon la revendication 8 ou 9, qui est réalisé de manière continue.

11. Procédé selon l'une quelconque des revendications 8 à 10, qui se traduit par la formation de cristaux en forme de VI.

12. Procédé selon l'une quelconque des revendications 8 à 11, dans lequel la masse contenant du beurre de cacao est choisie parmi le beurre de cacao, le chocolat, l'équivalent du beurre de cacao, le substitut de beurre de cacao et des succédanés.

13. Procédé selon l'une quelconque des revendications 8 à 11, dans lequel la masse contenant le beurre de cacao est un mélange de beurre de cacao avec la matière grasse anhydre du lait et/ou un améliorant du beurre de cacao, ou un mélange de beurre de cacao avec une autre matière grasse, de préférence une matière grasse de remplissage.
